# FASCICULE DE BREVET EUROPEEN

(11) **EP 1 750 934 B1**
(45) Date de publication et mention de la délivrance du brevet: **19.12.2007**
(21) Numéro de dépôt: 05744268.3
(22) Date de dépôt: 30.03.2005
(51) Int. Cl.: B32B 3/28, B32B 15/08

(54) **OPERCULES PREDECOUPES POUR POTS DE GRANDE CONTENANCE**
VORGESCHNITTENE DICHTUNGEN FÜR GROSSVOLUMIGE GEFÄSSE
PRECUT SEALS FOR LARGE VOLUME JARS

(30) Priorité: 31.03.2004 FR 0403363
(43) Date de publication de la demande: 14.02.2007
(73) Titulaire: Alcan Packaging Flexible France, 75218 Paris Cedex 18 (FR)
(72) Inventeur: SWYNGEDAUW, Gilles, 21240 Talant (FR); DE BIGOUSE, Rémy, 21000 Dijon (FR)
(74) Mandataire: Marsolais, Richard
(86) Numéro de dépôt international: PCT/FR2005/000756
(87) Numéro de publication internationale: WO 2005/100010

(56) Documents cités:
- EP-A- 0 149 180
- EP-A- 0 242 252
- EP-A- 0 511 562
- DE-U- 20 300 352
- FR-A- 2 831 483
- GB-A- 1 536 556
- US-A- 5 145 737

## Description

### DOMAINE DE L'INVENTION

L'invention concerne le domaine des opercules prédécoupés destinés à obturer des pots contenant des produits laitiers frais, et plus particulièrement des opercules destinés à obturer des pots de contenance allant de 200 ml à 500 ml, voir 1 litre, le contenu de tels pots étant typiquement de la crème fraîche ou du fromage blanc, ou un dessert réfrigéré, destinée à être consommée en plusieurs fois.

L'invention ne concerne donc ni l'obturation des pots de yaourt qui sont intégralement consommés une fois ouverts, pots de 120 g qui ont contenance d'environ 125 ml, ni l'obturation de pots par utilisation d'un matériau d'operculage en bande.

### ETAT DE LA TECHNIQUE

Les opercules de pots de produits laitiers frais, typiquement les pots de crème, sont généralement d'opercules gaufrés en aluminium de 30 µm à 50 µm d'épaisseur, le gaufrage étant généralement de type "vermisseau", un tel gaufrage correspondant à une déformation localisée de la totalité de la surface de l'opercule, les parties en creux succédant aux parties en relief de manière ininterrompue sur la totalité de le surface de l'opercule, de manière à assurer le dépilage des piles d'opercules.

Ces opercules ont un diamètre allant de 75 mm à 150 mm, alors que les opercules de pots de yaourt ont typiquement un diamètre moyen inférieur à 75 mm.

Les opercules d'aluminium selon l'état de la technique sont largement utilisés car ils permettent d'obtenir un repli plastique de l'opercule afin de pouvoir rabattre l'opercule sur le pot, après utilisation, l'opercule, après une première ouverture, étant resté solidarisé au pot par une fraction de son cordon de scellage.

Même si l'opercule rabattu ne constitue pas une fermeture hermétique, il forme une barrière suffisante pour éviter que les odeurs des produits frais conservés dans le réfrigérateur ne se mélangent rapidement.

On sait aussi qu'il existe, notamment pour obturer des pots de yaourt, des matériaux d'operculage en matière plastique ou métalloplastiques à base d'Al et PE. Ces matériaux, même s'ils améliorent nettement la résistance à la déchirure lors de l'ouverture du pot, ne permettent pas de l'éviter complètement en particulier parce que la force de scellage entre le pot, qui est généralement en PS ou en PP, est très élevée.

### PROBLEMES POSES

Les opercules d'aluminium selon l'état de la technique présentent cependant plusieurs inconvénients :
- d'une part, ces opercules se déchirent facilement, notamment lors de l'ouverture du pot,
- d'autre part, si l'on augmente l'épaisseur d'aluminium, ces opercules sont de coût prohibitif.

Les opercules prédécoupés en matière plastique ne conviendraient pas pour obturer des pots de crème, notamment parce qu'ils ne forment pas une barrière assez élevée à l'oxygène et à la lumière et que leur capacité de tenue au pli ne permet pas de maintenir plié l'opercule après première ouverture pour accéder au produit à consommer, puis de le déplier afin de le repositionner sur le pot pour l'obturer de manière non étanche en vue de repositionner l'opercule sur le pot.

Les opercules prédécoupés métalloplastiques à base d'Al et PE ne conviendraient pas davantage car ils ne permettraient pas d'avoir simultanément :
- un opercule économique,
- un opercule plan et facile à dépiler,
- un opercule de haute résistance à la déchirure,
- un opercule présentant un repli non élastique suffisant pour refermer le pot après une première ouverture.

### DESCRIPTION DE L'INVENTION

L'opercule prédécoupé, destiné à obturer un pot, typiquement en PS ou PP, de grande capacité allant typiquement de 200 ml à 1 litre, formé par découpage d'un matériau multicouche comprenant une couche d'aluminium Al, une couche de matière plastique MP et une couche intérieure de scellage CS, est caractérisé en que :
a) les épaisseurs E_{Al} et E_{MP} des couches d'Al et de matière plastique MP sont telles que E_{Al} / E_{MP} sont compris entre 0,5 et 4,
b) la somme des épaisseurs E_{Al} + E_{MP} est comprise entre 30µm et 100 µm,
c) l'épaisseur E_{Al} de la couche d'aluminium est comprise entre 15 µm et 45 µm,
d) ladite matière plastique MP est un film bi-orienté, choisi parmi un PET bi-orienté OPET, ou un PA bi-orienté OPA, ou un PP bi-orienté OPP,
e) ledit opercule comprend un moyen de dépilage qui est un moyen de gaufrage choisi pour que la résistance à la déchirure d'un opercule gaufré ou dudit matériau multicouche gaufré soit au moins égale à 80% de la résistance à la déchirure d'un opercule correspondant non gaufré ou dudit matériau multicouche non gaufré, de manière à obtenir un opercule qui soit simultanément parfaitement plan, dépilable, économique, à repli non élastique assurant une re-fermeture du pot après une première ouverture, et qui présente une résistance élevée à la déchirure.

Grâce à cette combinaison de moyens a) à e), il a été possible d'avoir des opercules qui répondent aux problèmes posés.

### DESCRIPTION DES FIGURES

La figure 1 représente, en coupe, un matériau multicouche d'un opercule (1) selon l'invention, avec, de l'extérieur vers l'intérieur : VSI / IP / Al / MP / CS, VSI, IP, Al, MP, CS désignant respectivement une couche externe de vernis de surimpression, une impression, la couche d'aluminium, la couche de matière plastique, et la couche de scellage.
La figure 2 représente, en coupe, une vue agrandie de portion d'opercule avec un treillis de points en relief (2) formés par un gaufrage à l'aide d'aiguilles.
La figure 3 représente une vue de dessous de la portion d'opercule de la figure 2.

### DESCRIPTION DETAILLEE DE L'INVENTION

Selon l'invention, ladite matière plastique MP peut être choisie, de préférence, parmi un PET bi-orienté OPET, ou un PA bi-orienté OPA, ou un PP bi-orienté OPP.

Dans tous les cas, il a été trouvé important que ladite matière plastique soit un film présentant un taux d'allongement relativement faible, afin que soit limité l'allongement dudit film durant la formation du complexe ou matériau multicouche Al / MP, et qu'ainsi soit également limité l'effet de roulage après formation dudit complexe, c'est-à-dire la tendance de toute portion du film en matériau multicouche Al / MP à ne pas rester plan et à typiquement se recourber à la manière d'une "tuile".

Typiquement, ladite épaisseur E_{Al} de la couche d'Al peut être comprise entre 20 et 45 µm, de préférence entre 25 µm et 40 µm.

Une telle plage d'épaisseur a été trouvée adaptée pour obtenir un opercule présentant un repli non élastique suffisant pour refermer le pot après une première ouverture.

Ledit matériau multicouche peut comprendre la succession de couches Al, MP et CS représentée symboliquement par Al / MP / CS.

Une couche adhésive Ad peut assurer la solidarisation ou complexage des couches Al et MP, de manière à ce que ledit matériau multicouche comprenne la succession de couches Al / Ad / MP / CS, la force d'adhérence entre les couches Al et MP étant typiquement supérieure à la force d'adhérence entre la couche CS et ledit pot.

En effet, ladite couche MP de matière plastique peut comprendre ou non des moyens d'adhérence à la couche d'Al. Ainsi, une couche de PP peut comprendre un copolymère comprenant typiquement des groupements acides aptes à assurer une adhérence directe de ladite couche MP de matière plastique sur ladite couche Al.

Selon une modalité de l'invention, ladite couche de scellage CS peut comprendre un vernis thermoscellant formée par application d'une solution de vernis thermoscellant en milieu solvant sur la couche de matière plastique MP d'un matériau multicouche comprenant Al / MP ou Al / Ad / MP, une couche d'accrochage étant éventuellement appliquée entre lesdites couches MP et CS.

Selon une autre modalité de l'invention, ladite couche de scellage CS peut être une couche de matière plastique extrudée CS' typiquement formée avec ladite couche de matière plastique MP, le matériau multicouche MP / CS', typiquement coextrudé, étant ensuite solidarisé ou complexé à la couche Al.

Quelle que soit la modalité de l'invention, l'épaisseur E_{MP} de ladite couche de matière plastique peut être comprise entre 8 µm et 50 µm, et peut aller de préférence de 12 µm à 30 µm.

Typiquement, ladite matière plastique peut présenter un module d'élasticité ou de Young supérieur à 200 MPa.

Ladite matière plastique peut comprendre une charge de renfort, à une teneur pondérale typiquement comprise entre 1 % et 10%, et de préférence comprise entre 1 % et 5%.

Cette charge de renfort peut avoir un double rôle, d'une part augmenter les caractéristiques mécaniques intrinsèques de la couche MP de matière plastique, d'autre part, faciliter le repli non élastique de l'opercule, de manière à obtenir un opercule comprenant une épaisseur moindre de la couche d'Al, tout en présentant à la fois une résistance à la déchirure et un repli non élastique suffisant pour refermer le pot après une première ouverture satisfaisants.

Ladite couche de scellage CS ou CS' peut être choisie en nature, typiquement à base d'EVA ou d'un polymère acrylique, de manière à obtenir un opercule pelable, avec une force de pelage allant de 200 N/15mm à 2000 N/15mm, et de préférence de 400 N/15mm à 1000 N/15mm.

Selon l'invention, il est avantageux de choisir pour la couche de scellage une matière qui conduise à un pelage uniforme et avec une force de pelage relativement faible.

En effet, la demanderesse a observé qu'il était possible dans ce cas de diminuer les épaisseurs des différentes couches Al et MP, en particulier d'assurer une bonne résistance à la déchirure de l'opercule avec une épaisseur E_{MP} prise en relation avec la force de pelage de l'opercule.

Ladite couche de scellage CS peut présenter une épaisseur E_{CS} allant de 1 µm à 5 µm, et de préférence de 2 µm à 4 µm.

Ladite couche de scellage CS' peut présenter une épaisseur E_{CS} allant de 5 µm à 20 µm.

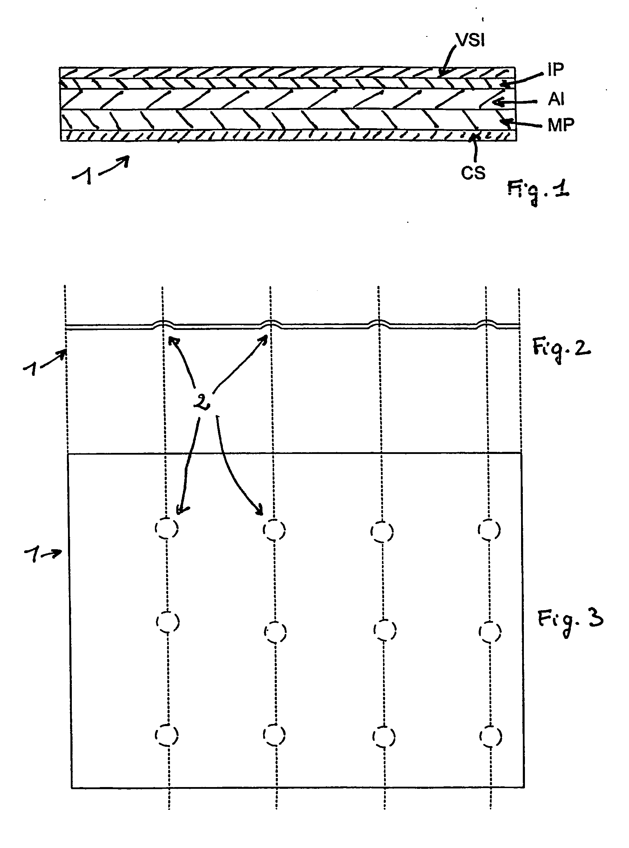

Selon l'invention, et comme illustré sur la figure 1, une impression IP peut être formée sur la face externe de la couche Al, ladite impression IP étant typiquement protégée par une couche de vernis de sur-impression VSI ou par un film protecteur FP.

En effet, le matériau multicouche Al / MP / CS sert généralement de support, sur sa face externe, à une impression IP qui peut tout à la fois constituer une information pour identifier le contenu du pot (nature, composition, fournisseur, marque du produit, etc...) et pour décorer l'opercule et le rendre attractif.

Selon une modalité de l'invention, et comme illustré sur les figures 2 et 3, ledit moyen de dépilage peut être un moyen de gaufrage par points à l'aide d'un gaufrage dit "aiguille", avec une densité de points inférieure à 20 points par cm², lesdits points ne déformant qu'une fraction de la surface plane dudit opercule inférieure à 5 %.

En effet, d'une part, les opercules prédécoupés étant sous forme d'une pile d'opercules, pile qui est placé dans un puits ou bac d'alimentation d'une machine de conditionnement, il importe que les opercules puissent être prélevés un à un et à grande cadence par le dessous de la pile.

Typiquement, lesdits points peuvent être espacés de 3 mm, lesdits points étant typiquement formés par pénétration de pointes d'aiguilles dans ledit matériau multicouche sur une profondeur suffisante pour entraîner une déformation permanente dudit matériau perpendiculairement au plan dudit matériau multicouche, sans amorcer de déchirure dudit matériau multicouche.

Cependant, ledit moyen de dépilage peut être formé par une pluralité de surépaisseurs locales et discontinues formées typiquement par et/ou sur ladite couche CS.

### EXEMPLES DE REALISATION

A) On a fabriqué les opercules pré-découpés de 95,5 et 116,6 mm de diamètre selon le tableau qui suit :

| Référence Essai | Couche Al (Al recuit) | Couche Ad | Couche MP = OPET | Couche CS | Moyen de Dépilage |
|---|---|---|---|---|---|
| 1 | E_{Al} = 45 µm | ------------- | -------------- | Standard 1 * | Gaufré |
| art antérieur | | | | | "vermisseau" |
| 2 | E_{Al} = 37 µm | ------------- | -------------- | Standard 2* | Gaufré |
| art antérieur | | | | | "vermisseau" |
| 3 | E_{Al} = 37 µm | ------------- | -------------- | Standard 1 * | Non gaufré |
| 4 | E_{Al} = 37 µm | ------------- | -------------- | Idem | Gaufré |
| | | | | | "aiguille" |
| 5 | E_{Al} = 37 µm | ------------- | --------------- | Idem | Gaufré |
| art antérieur | | | | | "vermisseau" |
| 6 | E_{Al} = 37 µm | Colle 3 µm | E_{MP} =12 µm | Idem | Non gaufré |
| 7 | E_{Al} = 37 µm | Colle 3 µm | E_{MP} = 12 µm | Idem | Gaufré |
| invention | | | | | "aiguille" |
| 8 | E_{Al} = 37 µm | Colle 3 µm | E_{MP} =12 µm | Idem | Gaufré |
| invention | | | | | "vermisseau" |
| 9 | E_{Al} = 30 µm | --------------- | --------------- | Idem | Non gaufré |
| 10 | E_{Al} = 30 µm | --------------- | --------------- | Idem | Gaufré |
| | | | | | "aiguillé" |
| 11 | E_{Al} = 30 µm | --------------- | --------------- | Idem | Gaufré |
| | | | | | "vermisseau" |
| 12 | E_{Al} = 30 µm | Colle 3 µm | E_{MP} = 12 µm | Idem | Non gaufré |
| 13 | E_{Al} = 30 µm | Colle 3 µm | E_{MP} = 12 µm | Idem | Gaufré |
| invention | | | | | "aiguille" |
| 14 | E_{Al} = 30 µm | Colle 3 µm | E_{MP} = 12µm | Idem | Gaufré |
| invention | | | | | "vermisseau" |

| | | | | | |
|---|---|---|---|---|---|
| * standard 1 = vernis base acrylique modifiée, et standard 2 = couche co-extrudée de copolymère éthylénique (EMA ou EVA) à 20-30 g/m² | | | | | |

Dans tous les cas, la couche extérieure d'Al a été imprimée, au besoin avec une couche de prélaquage ou de vernis d'accrochage, l'impression IP étant recouverte d'un vernis de sur-impression.

On a fabriqué aussi d'autres opercules à base d'OPP.

### B) Résultats obtenus :

Les opercules obtenus précédemment ont été thermoscellés sur des pots en PS et sur des pots en PP, sur machine de thermoscellage BHS avec mors plat de 3 mm, un temps de scellage de 1s et une pression de 0,4 bars (0,04 MPa), et cela à 3 températures : 200°C, 215°C et 230°C.

On a mesuré, sur film ou matériau multicouche :
B1) la résistance à la déchirure non amorcée dans le sens long et dans le sens travers, en Newtons (2 valeurs : sens long / sens travers),
B2) la charge à la rupture sur éprouvette de 15 mm de largeur,
B3) le taux d'allongement,
   On a mesure sur opercule thermoscellé :
B4) la résistance à l'éclatement,
B5) la force de pelage au début, en cours et en fin de pelage,
B6) l'aptitude de l'opercule au repli non élastique pour refermer le pot.

On a testé sur une pile d'opercules prédécoupés l'aptitude au dépilage (B7)

| No essai | B1 (N) | B2 | B3 | B4 | B5 | B6 | B7 |
|---|---|---|---|---|---|---|---|
| 1 | 16/18 | + | + | + | ++ | ++ | + |
| 2 | 22/22 | + | + | 0 | ++ | ++ | + |
| 3 | 19/19 | + | + | 0 | ++ | ++ | ++ |
| 4 | 19/19 | + | + | 0 | ++ | ++ | ++ |
| 5 | 13/14 | 0 | 0 | 0 | ++ | ++ | ++ |
| 6 | 46/40 | ++ | ++ | ++ | ++ | ++ | + |
| 7 | 46/40 | ++ | ++ | ++ | ++ | ++ | ++ |
| 8 | 36/32 | ++ | ++ | ++ | ++ | ++ | ++ |
| 9 | 15/15 | + | + | 0 | ++ | ++ | + |
| 10 | 15/15 | + | + | 0 | ++ | ++ | ++ |
| 11 | 12/12 | 0 | 0 | 0 | ++ | ++ | ++ |
| 12 | 30/30 | ++ | ++ | ++ | ++ | ++ | + |
| 13 | 30/30 | ++ | ++ | ++ | ++ | ++ | ++ |
| 14 | 25/24 | ++ | ++ | ++ | ++ | ++ | ++ |

Ces résultats ont été traduits qualitativement par cinq niveaux :
- excellent ou ++
- bon ou +
- acceptable ou 0
- mauvais ou -
- très mauvais ou - -

D'autres essais ont été effectués avec des opercules selon l'invention comprenant une couche d'aluminium de 25 µm et une couche de 12 µm de PET. Ces opercules, compte tenu de leur grand diamètre, ne sont pas assez rigides pour se maintenir dans le puits de dépilage servant à alimenter les machines de conditionnement actuelles. En effet, dans les machines de conditionnement actuelles, la pile d'opercules est maintenue par des ergots latéraux, et c'est l'opercule du dessous de pile qui est prélevé.

### C) Conclusions :

Les études entreprises par la demanderesse ont montré que pour obtenir des résistances à la déchirure non amorcée équivalentes à celles d'un matériau sous forme de complexe "Al 37µm / OPET 12 µm", il faudrait avoir une épaisseur d'aluminium d'au moins 80 µm, ce qui ne serait économiquement acceptable.

Ces études ont montré d'une part la possibilité d'avoir des opercules présentant une haute résistance à la déchirure (voir essais 6, 7, 8, 12, 13 et 14), même avec une couche d'aluminium d'épaisseur aussi faible que de 30 µm, et avec un film PET de 12 µm, de faible épaisseur également.

Ces études ont montré d'autre part l'importance du type de gaufrage : un gaufrage par points de type "aiguille" ne diminue pas la résistance à la déchirure, contrairement aux moyens de gaufrage utilisés habituellement.

### AVANTAGES DE L'INVENTION

L'invention présente de grands avantages.

En effet, elle permet d'obtenir des opercules prédécoupés qui répondent à l'ensemble des problèmes posés, tant sur le plan économique que sur le plan technique, et cela à tous les stades de l'opercule, qu'il s'agisse de sa fabrication, de son scellage sur des pots, de son aptitude à protéger durablement le contenu des pots, de sa facilité d'ouverture et de refermeture par le consommateur final.

## Revendications

1. Opercule prédécoupé, destiné à obturer un pot, typiquement en PS ou PP, de grande capacité allant typiquement de 200 ml à 1 litre, formé par découpage d'un matériau multicouche comprenant une couche d'aluminium A1, une couche de matière plastique MP et une couche intérieure de scellage CS, **caractérisé en que** :
a) les épaisseurs E_{Al} et E_{MP} des couches d'Al et de matière plastique MP sont telles que E_{Al} / E_{MP} sont compris entre 0,5 et 4,
b) la somme des épaisseurs E_{Al} + E_{MP} est comprise entre 30µm et 100 µm,
c) l'épaisseur E_{Al} de la couche d'aluminium est comprise entre 15 µm et 45 µm,
d) ladite matière plastique MP est un film bi-orienté choisi parmi un PET bi-orienté OPET, ou un PA bi-orienté OPA, ou un PP bi-orienté OPP,
e) ledit opercule comprend un moyen de dépilage qui est un moyen de gaufrage, choisi pour que la résistance à la déchirure d'un opercule gaufré ou dudit matériau multicouche gaufré soit au moins égale à 80% de la résistance à 1a déchirure d'un opercule correspondant non gaufré ou dudit matériau multicouche non gaufré,
de manière à obtenir un opercule qui soit simultanément parfaitement plan, dépilable, économique, à repli non élastique assurant une re-fermeture du pot après une première ouverture, et qui présente une résistance élevée à la déchirure.

2. Opercule selon la revendication 1 dans lequel ladite épaisseur E_{Al} de la couche d'Al est comprise entre 20 et 45 µm, de préférence entre 25 µm et 40 µm.

3. Opercule selon une quelconque des revendications 1 à 2 dans lequel ledit matériau multicouche comprend la succession de couches Al, MP et CS représentée symboliquement par A1 / MP / CS.

4. Opercule selon une quelconque des revendications 1 à 3 dans lequel une couche adhésive Ad assure la solidarisation ou complexage des couches Al et MP, de manière à ce que ledit matériau multicouche comprenne la succession de couches Al / Ad / MP / CS, la force d'adhérence entre les couches Al et MP étant typiquement supérieure à la force d'adhérence entre la couche CS et ledit pot.

5. Opercule selon une quelconque des revendications 1 à 4 dans lequel ladite couche de scellage CS comprend un vernis thermoscellant formée par application d'une solution de vernis thermoscellant en milieu solvant sur la couche de matière plastique MP d'un matériau multicouche comprenant Al / MP ou Al / Ad / MP, une couche d'accrochage étant éventuellement appliquée entre lesdites couches MP et CS.

6. Opercule selon une quelconque des revendications 1 à 4 dans lequel ladite couche de scellage CS est une couche de matière plastique extrudée CS' typiquement formée avec ladite couche de matière plastique MP, le matériau multicouche MP / CS', typiquement coextrudé, étant ensuite solidarisé ou complexé à la couche Al.

7. Opercule selon une quelconque des revendications 2 à 6 dans lequel l'épaisseur E_{MP} de ladite couche de matière plastique est comprise entre 8 µm et 50 µm, et va de préférence de 12 µm à 30 µm.

8. Opercule selon une quelconque des revendications 1 à 7 dans lequel ladite matière plastique présente un module d'élasticité ou de Young supérieur à 200 MPa.

9. Opercule selon une quelconque des revendications 1 à 8 dans lequel ladite matière plastique comprend une charge de renfort, à une teneur pondérale typiquement comprise entre 1% et 10%, et de préférence comprise entre 1% et 5%.

10. Opercule selon une quelconque des revendications 1 à 9 dans lequel ladite couche de scellage CS ou CS' est choisie en nature, typiquement à base d'ÉVA ou d'un polymère acrylique, de manière à obtenir un opercule pelable, avec une force de pelage allant de 200 N/15mm à 2000 N/15mm, et de préférence de 400 N/15mm à 1000 N/15mm.

11. Opercule selon une quelconque des revendications 1 à 10 dans lequel ladite couche de scellage CS présente une épaisseur E_{CS}, allant de 1 µm à 5 µm, et de préférence de 2 µm à 4 µm.

12. Opercule selon une quelconque des revendications 6 à 10 dans lequel ladite couche de scellage CS' présente une épaisseur E_{CS'} allant de 5 µm à 20 µm.

13. Opercule selon une quelconque des revendications 1 à 12 dans lequel une impression IP est formée sur la face externe de la couche Al, ladite impression IP étant typiquement protégée par une couche de vernis de sur-impression VSI ou par un film protecteur FP.

14. Opercule selon une quelconque des revendications 1 à 13 dans lequel ledit moyen de dépilage est un moyen de gaufrage par points, avec une densité de points inférieure à 20 points par cm², lesdits points ne déformant qu'une fraction de la surface plane dudit opercule inférieure à 5 %.

15. Opercule selon la revendication 14 dans lequel lesdits points sont espacés de 3 mm, lesdits points étant typiquement formés par pénétration de pointes d'aiguilles dans ledit matériau multicouche sur une profondeur suffisante pour entraîner une déformation permanente dudit matériau perpendiculairement au plan dudit matériau multicouche.

16. Opercule selon une quelconque des revendications 1 à 13 dans lequel ledit moyen de dépilage est formé par une pluralité de surépaisseurs locales et discontinues formées typiquement par et/ou sur ladite couche CS.

## Claims

1. Pre-cut seal, intended to seal a jar, typically made of PS or PP, of large volume typically ranging from 200 ml to 1 1, formed by cutting out a multilayer material including an aluminium layer Al, a layer of plastic material MP and an internal sealing layer CS, **characterised in that**:
a) the thicknesses E_{A1} and E_{MP} of the layers of aluminium and plastic material MP are such that E_{A1} and E_{MP} are between 0.5 and 4,
b) the sum of thicknesses E_{A1} and E_{MP} is between 30 µm and 100 µm,
c) the thickness E_{A1} of the aluminium layer is between 15 µm and 45 µm,
d) said plastic material MP is a biaxially oriented film, chosen from an OPET biaxially oriented PET, an OPA biaxially oriented PA, or an OPP biaxially oriented PP,
e) said seal includes destacking means, which are embossing means, chosen so that the tear strength of an embossed seal or of said embossed multilayer material is at least equal to 80 % of the tear strength of a corresponding non-embossed seal or of said non-embossed multilayer material,
so as to obtain a seal that is simultaneously perfectly planar, capable of being destacked, economical, and with non-elastic folding ensuring resealing of the jar after a first opening, and which has a high tear strength.

2. Seal according to claim 1, **characterised in that** the thickness E_{A1} of the Al layer is between 20 and 45 µm, and preferably between 25 µm and 40 µm.

3. Seal according to one of claims 1 or 2, **characterised in that** said multilayer material includes the series of Al, MP and CS layers symbolically represented by Al / MP / CS.

4. Seal according to any one of claims 1 to 3, **characterised in that** an adhesive layer Ad ensures the integration or complexing of the Al and MP layers, so that said multilayer material includes the series of layers Al / Ad / MP / CS, with the adhesion strength between the Al and MP layers typically being greater than the adhesion strength between the CS layer and said jar.

5. Seal according to any one of claims 1 to 4, **characterised in that** said sealing layer CS includes a heat-sealing varnish formed by applying a heat-sealing varnish solution in a solvent medium on the layer of plastic material MP of a multilayer material including Al / MP or Al / Ad / MP, with a primer layer optionally being applied between said MP and CS layers.

6. Seal according to any one of claims 1 to 4, **characterised in that** said sealing layer CS is a layer of extruded plastic material CS' typically formed with said layer of plastic material MP, with the multilayer material MP / CS', typically co-extruded, then being integrated or complexed with the Al layer.

7. Seal according to any one of claims 2 to 6, **characterised in that** the thickness E_{MP} of said layer of plastic material is between 8 µm and 50 µm, and will preferably be between 12 µm and 30 µm.

8. Seal according to any one of claims 1 to 7, **characterised in that** said plastic material has a modulus of elasticity module or a Young's modulus greater than 200 MPa.

9. Seal according to any one of claims 1 to 8, **characterised in that** said plastic material includes a reinforcing filler, with a weight content between 1 % and 10 %, and preferably between 1 % and 5 %.

10. Seal according to any one of claims 1 to 9, **characterised in that** the type of said sealing layer CS or CS', typically based on EVA or an acrylic polymer, is chosen so as to obtain a peelable seal, with a pealing strength ranging from 200 N/15mm to 2000 N/ 15 mm, and preferably 400 N/ 15 mm to 100 N/ 15 mm.

11. Seal according to any one of claims 1 to 10, **characterised in that** said sealing layer CS has a thickness E_{CS} ranging from 1 µm to 5 µm, and preferably from 2 µm to 4 µm.

12. Seal according to any one of claims 6 to 10, **characterised in that** said sealing layer CS' has a thickness E_{CS}, ranging from 5 µm to 20 µm.

13. Seal according to any one of claims 1 to 12, **characterised in that** an IP imprint is formed on the external face of the Al layer, with said IP imprint typically being protected by a layer of overprint varnish VSI or by a protective film FP.

14. Seal according to any one of claims 1 to 13, **characterised in that** said destacking means are point embossment means, with a point density below 20 points per cm², said points deforming only a fraction of the planar surface of said seal below 5 %.

15. Seal according to claim 14, **characterised in that** said points are spaced apart by 3 mm, and are typically formed by needle point penetration in said multilayer material over a sufficient depth to cause permanent deformation of said material perpendicularly to the plane of said multilayer material.

16. Seal according to any one of claims 1 to 13, **characterised in that** said destacking means are formed by a plurality of local and discontinuous areas of increased thickness typically formed by and/or on said CS layer.

## Patentansprüche

1. Vorgeschnittene Deckelfolie zum Verschließen eines typischerweise aus PS oder PP bestehenden Gefäßes mit großem Fassungsvermögen von typischerweise 200 ml bis 1 Liter, hergestellt durch Ausstanzen aus einem Mehrschichtmaterial mit einer Aluminiumschicht Al, einer Kunststoffschicht MP und einer inneren Siegelschicht CS, **dadurch gekennzeichnet, dass**:
a) die Dicken E_{Al} und E_{MP} der Al-Schicht und der Kunststoffschicht MP so gewählt sind, dass E_{Al} / E_{MP} 0,5 bis 4 betragen,
b) die Summe der Dicken E_{Al} + E_{MP} 30 µm bis 100 µm beträgt,
c) die Dicke E_{Al} der Aluminiumschicht 15 µm bis 45 µm beträgt,
d) der Kunststoff MP ein bi-orientierter Film ist, gewählt unter einem bi-orientierten PET (OPET) oder einem bi-orientierten PA (OPA) oder einem bi-orientierten PP (OPP),
e) die Deckelfolie ein Mittel zum Entstapeln aufweist, bei dem es sich um ein Mittel zum Prägen handelt, das so gewählt ist, dass die Reißfestigkeit einer geprägten Deckelfolie oder des geprägten Mehrschichtmaterials mindestens 80 % der Reißfestigkeit einer entsprechenden nicht geprägten Deckelfolie oder eines nicht geprägten Mehrschichtmaterials beträgt,
um so eine Deckelfolie zu erhalten, die gleichzeitig völlig glatt, entstapelbar und wirtschaftlich ist und einen unelastischen, umgebogenen Rand für ein Wiederverschließen des Gefäßes nach einem erstmaligen Öffnen aufweist und die eine hohe Reißfestigkeit besitzt.

2. Deckelfolie nach Anspruch 1, bei der die Dicke E_{Al} der Al-Schicht 20 bis 45 µm, vorzugsweise 25 µm bis 40 µm beträgt.

3. Deckelfolie nach irgendeinem der Ansprüche 1 bis 2, bei der das Mehrschichtmaterial aus der Schichtenfolge Al, MP und CS besteht, symbolisch dargestellt durch Al / MP/ CS.

4. Deckelfolie nach irgendeinem der Ansprüche 1 bis 3, bei der eine Adhäsivschicht Ad die Verbindung oder Komplexbildung der Schichten Al und MP bewirkt, so dass das Mehrschichtmaterial aus der Schichtenfolge Al / Ad / MP / CS besteht, wobei die Adhäsivkraft zwischen den Schichten Al und MP typischerweise größer ist als die Adhäsivkraft zwischen der Schicht CS und dem Gefäß.

5. Deckelfolie nach irgendeinem der Ansprüche 1 bis 4, bei der die Siegelschicht CS aus einem Heißsiegellack besteht und durch Auftragen von in Lösungsmittel gelöstem Heißsiegellack auf die Kunststoffschicht MP eines Mehrschichtmaterials aus Al / MP oder Al / Ad / MP gebildet wird, wobei zwischen den Schichten MP und CS eventuell eine Haftvermittlerschicht aufgetragen ist.

6. Deckelfolie nach irgendeinem der Ansprüche 1 bis 4, bei der die Siegelschicht CS eine typischerweise mit der Kunststoffschicht MP gebildete, extrudierte Kunststoffschicht CS' ist, wobei das typischerweise koextrudierte Mehrschichtmaterial MP / CS' anschließend mit der Schicht Al verbunden oder mit ihr einen Komplex bildet.

7. Deckelfolie nach irgendeinem der Ansprüche 2 bis 6, bei der die Dicke E_{MP} der Kunststoffschicht 8 µm bis 50 µm beträgt und vorzugsweise von 12 µm bis 30 µm reicht.

8. Deckelfolie nach irgendeinem der Ansprüche 1 bis 7, bei der der Kunststoff einen Elastizitätsmodul oder Young-Modul größer als 200 MPa aufweist.

9. Deckelfolie nach irgendeinem der Ansprüche 1 bis 8, bei der der Kunststoff einen Verstärkungsfüllstoff mit einem Gewichtsanteil von typischerweise 1 bis 10 % und vorzugsweise 1 bis 5 % aufweist.

10. Deckelfolie nach irgendeinem der Ansprüche 1 bis 9, bei der die Siegelschicht CS oder CS' typischerweise auf EVA-Basis oder auf Basis eines Acrylpolymers gewählt wird, um eine abziehbare Deckelfolie mit einer Abziehkraft zu erhalten, die von 200 N/15 mm bis 2000N/15 mm und vorzugsweise 400 N/15 mm bis 1000 N/15 mm reicht.

11. Deckelfolie nach irgendeinem der Ansprüche 1 bis 10, bei der die Siegelschicht CS eine Dicke E_{CS'} von 1 µm bis 5 µm und vorzugsweise 2 µm bis 4 µm aufweist.

12. Deckelfolie nach irgendeinem der Ansprüche 6 bis 10, bei der die Siegelschicht CS' eine Dicke E_{CS'} von 5 µm bis 20 µm aufweist.

13. Deckelfolie nach irgendeinem der Ansprüche 1 bis 12, bei der an der Unterseite der Schicht Al ein Aufdruck IP vorgesehen ist, wobei der Aufdruck IP typischerweise durch eine Überzugslackschicht VSI oder durch einen Schutzfilm FP geschützt ist.

14. Deckelfolie nach irgendeinem der Ansprüche 1 bis 13, bei der das Mittel zum Entstapeln ein Mittel zum Punktprägen mit einer Punktdichte kleiner als 20 Punkte pro cm² ist, wobei die Punkte nur einen Bruchteil kleiner als 5 % der glatten Oberfläche der Deckelfolie verformen.

15. Deckelfolie nach Anspruch 14, bei der die Punkte 3 mm voneinander beabstandet sind, wobei die Punkte typischerweise durch Eindringen von Nadelspitzen in das Mehrschichtmaterial bis in eine Tiefe gebildet werden, die ausreicht, um eine bleibende Verformung des Materials quer zur Ebene des Mehrschichtmaterials herbeizuführen.

16. Deckelfolie nach irgendeinem der Ansprüche 1 bis 13, bei der das Mittel zum Entstapeln aus einer Vielzahl lokaler, diskontinuierlicher Überdicken besteht, die typischerweise von und/oder auf der Schicht CS gebildet sind.
